# EUROPÄISCHE PATENTSCHRIFT

(11) **EP 2 733 403 B1**
(45) Veröffentlichungstag und Bekanntmachung des Hinweises auf die Patenterteilung: **18.03.2015**
(21) Anmeldenummer: 13187469.5
(22) Anmeldetag: 07.10.2013
(51) Int. Cl.: F16L 37/56

(54) **Kupplungseinrichtung für Medienleitungen**
Coupling device for media conduits
Dispositif d'accouplement pour conduites de fluide

(30) Priorität: 14.11.2012 DE 102012110935
(43) Veröffentlichungstag der Anmeldung: 21.05.2014
(73) Patentinhaber: Voss Automotive GmbH, 51688 Wipperfürth (DE)
(72) Erfinder: Preiss, Oliver, 40882 Ratingen (DE); Brandt, Josef, 51688 Wipperfürth (DE); Klehr, Adrian, 58802 Balve (DE)
(74) Vertreter: Patentanwälte Dr. Solf & Zapf

(56) Entgegenhaltungen:
- EP-A1- 1 801 485
- WO-A1-01/65165
- WO-A1-2006/077264

## Beschreibung

Die vorliegende Erfindung betrifft gemäß dem Oberbegriff des unabhängigen Anspruchs 1 eine Kupplungseinrichtung für Schlauch- und/oder Rohrleitungen, insbesondere für Wandungsdurchführungen von Druckmittelleitungen, mit zwei plattenartigen, miteinander in paralleler Anordnung mit einander zugewandten Kupplungsseiten verbindbaren Kupplungsträgern, die jeweils Aufnahmeöffnungen zur fixierten Halterung von eingesetzten Steckkupplungsteilen, und zwar von Steckerteilen einerseits und Muffenteilen andererseits, derart aufweisen, dass durch eine Fügeverbindung der Kupplungsträger die Stecker- und Muffenteile paarweise in einer Fügerichtung ineinander gesteckt werden, wobei innerhalb jeder Aufnahmeöffnung jedes Kupplungsträgers derart ausgebildete Haltemittel vorgesehen sind, dass jedes Steckkupplungsteil einerseits bei getrennten Kupplungsträgern in die zugehörige Aufnahmeöffnung - insbesondere von einer rückwärtigen, der Kupplungsseite gegenüberliegenden Leitungsseite her - rastend einsteckbar sowie andererseits im verbundenen Zustand der Kupplungsträger durch selbsttätiges Sperren der Haltemittel unlösbar gehalten ist.

Vor allem in der Fahrzeugtechnik werden häufig für ein gemeinsames Kuppeln mehrerer Leitungen, insbesondere im Bereich von Wandungsdurchführungen, so genannte Mehrfach-Kupplungen eingesetzt. Mit diesen Mehrfach-Kupplungen können jeweils mehrere Muffen- und Steckerteile gleichzeitig in einem Vorgang miteinander verbunden und voneinander getrennt werden.

Derartige Kupplungseinrichtungen, wie sie beispielsweise in den Dokumenten EP 0 618 393 B1 und EP 1 841 995 B1 jeweils beschrieben sind, haben sich in der Praxis sehr gut bewährt, weil die Leitungen bereits vor der eigentlichen Montage der Kupplungseinrichtung an den Steckkupplungsteilen angeschlossen, das heißt vormontiert werden können, denn die Steckkupplungsteile werden bevorzugt jeweils von der Rückseite des jeweiligen Kupplungsträgers her in die Aufnahmeöffnungen eingesteckt und dabei über die Rastmittel - bei diesen bekannten Ausführungen kraftformschlüssig und dadurch auch wieder rastend lösbar - vorfixiert. Durch Zusammenfügen der beiden Kupplungsträger werden dann einerseits die Steckkupplungsteile miteinander steckverbunden, andererseits erfolgt auch eine selbsttätige Sperrung der Haltemittel derart, dass im verbundenen Zustand der Kupplungsträger die Steckkupplungsteile unlösbar durch einen axialen Formschluss gehalten werden. Die Verbindung kann aber jederzeit auf Wunsch wieder gelöst werden, denn nach Trennen der Kupplungsträger wird die Sperrung der Haltemittel aufgehoben, so dass die Steckkupplungsteile wieder rastend aus den Aufnahmeöffnungen herausgezogen werden können. Auch hierbei können die Leitungen an den Steckkupplungsteilen angeschlossen bleiben.

Die Ausgestaltung der Kupplungsträger mit den innerhalb der Aufnahmeöffnungen für die Steckkupplungsteile vorgesehenen speziellen Haltemitteln führt allerdings zu einem gewissen Herstellungsaufwand, und zwar vor allem dann, wenn die Kupplungsträger als jeweils einstückige Formteile aus Kunststoff ausgebildet sind. Zudem sind bei solchen Mehrfachkupplungen die Kupplungsträger in aller Regel kundenspezifische Teile, was bedeutet, dass die äußeren Anschluss- und Verbindungskonturen nicht immer gleich sein können, sondern sie müssen an den jeweiligen Anwendungsfall angepasst werden. Deshalb muss für jede Ausführung eines Kupplungsträgers ein vollständig neues Spritzwerkzeug hergestellt werden, was besonders wegen der speziellen Haltekonturen für die Steckverbinderteile aufwändig ist, wobei der Aufwand zudem mit der Anzahl der insgesamt vorhandenen Steckkupplungsteile bzw. der für diese erforderlichen Aufnahmeöffnungen noch ansteigt.

Der vorliegenden Erfindung liegt daher die Aufgabe zu Grunde, eine Kupplungseinrichtung der beschriebenen, gattungsgemäßen Art zu schaffen, deren Entwicklungs- und Produktionsaufwand deutlich reduziert wird. Dabei sollen allerdings die Vorteile der bekannten, oben beschriebenen Kupplungseinrichtungen grundsätzlich beibehalten werden.

Erfindungsgemäß wird dies durch die Merkmale des unabhängigen Anspruchs 1 erreicht. Vorteilhafte Ausgestaltungsmerkmale der Erfindung sind in den abhängigen Ansprüchen sowie der anschließenden Beschreibung enthalten.

Demnach ist erfindungsgemäß jede Aufnahmeöffnung zusammen mit den Haltemitteln in einem separaten, patronenartigen Halteeinsatz gebildet, wobei jeder Halteeinsatz in eine zugehörige Aufnahme des jeweiligen Kupplungsträgers eingesetzt und darin gegen Lösen fixiert ist. Somit wird erfindungsgemäß eine Art Modul-Aufbau geschaffen, wobei der jeweilige Kupplungsträger einerseits mit individuellen äußeren Anschluss- und Verbindungskonturen, andererseits aber mit standardisierten, stets gleichen Aufnahmen für die erfindungsgemäßen Halteeinsätze ausgebildet sein kann. Die Aufnahmen können wegen der hier nicht mehr erforderlichen, weil in die gesonderten Halteeinsätze verlagerten Haltemittel als einfache Öffnungen ausgebildet sein, die im einfachsten Fall eine formtechnisch günstige zylindrische Innenkontur aufweisen können. Aus der Erfindung resultiert somit eine deutliche Vereinfachung der Kupplungsträger, so dass auch die erforderlichen Spritzwerkzeuge deutlich vereinfacht werden können. Durch die separate Herstellung der Halteeinsätze kann für diese stets das gleiche Werkzeug verwendet werden, abgesehen gegebenenfalls von unterschiedlichen Anschlussgrößen. Jedenfalls ist die Herstellung der Halteeinsätze vorteilhafterweise unabhängig von den kundenspezifischen Vorgaben für die Ausgestaltung der Kupplungsträger. Dadurch kann eine Vereinheitlichung der Außenkontur der Halteeinsätze erfolgen, so dass diese mit Vorteil für alle unterschiedlichen Kupplungsträger verwendet werden können. Die Werkzeuge für die Herstellung der Halteeinsätze können somit für eine kosteneffiziente Produktion auf große Stückzahlen ausgelegt werden. Auch die Werkzeuge für die kundenspezifischen Kupplungsträger werden kostengünstiger und auch haltbarer, weil in den Kupplungsträgern nur noch einfache Aufnahmen für die Halteeinsätze zu bilden sind. Zudem können auch Werkzeug-Änderungen zur Herstellung der Kupplungsträger einfach und kostengünstig durchgeführt werden. Wenn beispielsweise die Aufnahmen geändert werden müssen, weil Halteeinsätze mit anderer Querschnittsgröße verwendet werden müssen, so können lediglich bestimmte Werkzeugeinsätze ausgetauscht werden, die die jeweilige Innenkontur der Aufnahmen in dem Kupplungsträger erzeugen. Sollten sich weiterhin kundenspezifische Kupplungsträger zu einem späteren Zeitpunkt in Bezug auf die Leitungsgrößen ändern, kann diese Änderung durch vereinheitlichte Außenkonturen der Halteeinsätze durch einfachen Austausch der Halteeinsätze im Montageprozess durchgeführt werden. Bei Kupplungen nach dem Stand der Technik müssten hierfür stets neue Werkzeuge erstellt werden. Insgesamt kann somit der Entwicklungs- und Herstellungsaufwand für die erfindungsgemäße Kupplungseinrichtung deutlich minimiert werden.

Anhand von bevorzugten, in der Zeichnung veranschaulichten Ausführungsbeispielen soll die Erfindung im Folgenden weitergehend erläutert werden. Dabei zeigen:
- Fig. 1: eine perspektivische Explosionsdarstellung eines der zwei Kupplungsträger der erfindungsgemäßen Kupplungseinrichtung mit den zugehörigen Komponenten,
- Fig. 2: eine perspektivische Explosionsdarstellung des anderen Kupplungsträgers der erfindungsgemäßen Kupplungseinrichtung,
- Fig. 3 bis 6: jeweils einen Axialschnitt durch den Bereich von zwei zugehörigen Steckkupplungsteilen im Bereich der in Fig. 1 und 2 jeweils eingezeichneten Schnittlinie III-III, und zwar

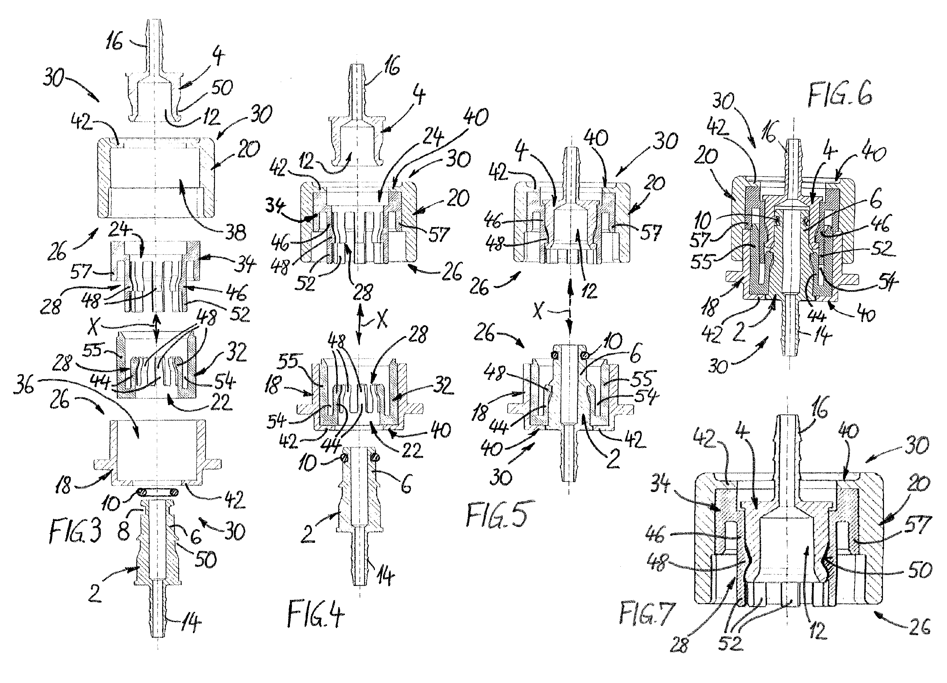

Fig. 3 eine Explosionsdarstellung der Komponenten in lagerichtiger Zuordnung vor der Montage,
Fig. 4 einen Vor- bzw. Zwischenmontagezustand der Komponenten,
Fig. 5 den montierten Zustand der Kupplungsträger mit eingesetzten Steckkupplungsteilen vor der Fügeverbindung der Kupplungsträger sowie
Fig. 6 den fertig montierten und gekuppelten Zustand der erfindungsgemäßen Kupplungseinrichtung (gegenüber Fig. 3 bis 5 leicht vergrößert),
- Fig. 7: eine gegenüber Fig. 5 vergrößerte Schnittansicht des oberen Kupplungsträgers in einer alternativen Ausgestaltung der Verrastung des Steckkupplungsteils,

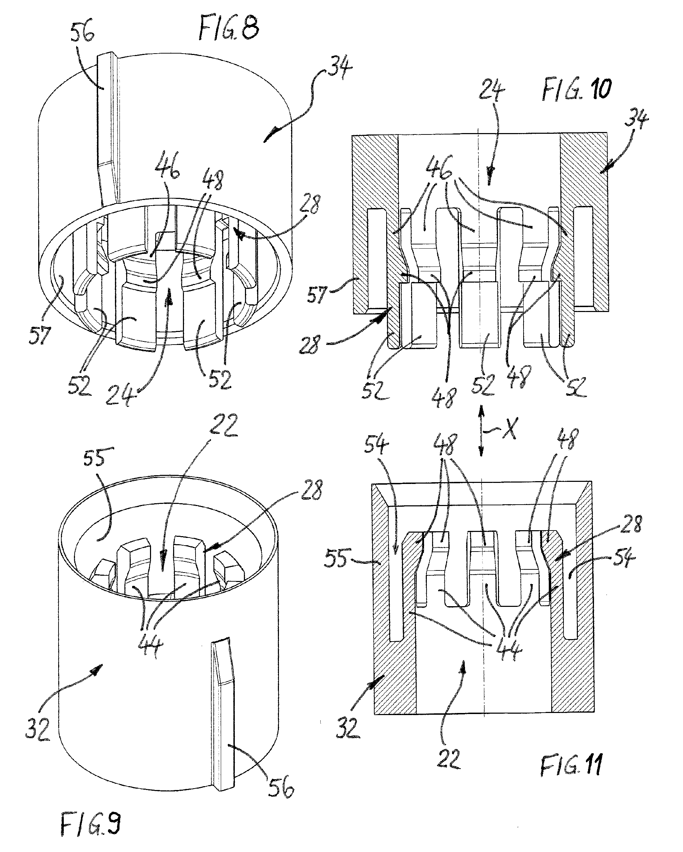

- Fig. 8: eine gesonderte und stark vergrößerte Perspektivansicht einer ersten, insbesondere zur Aufnahme eines Muffenteils vorgesehenen Ausführung eines erfindungsgemäßen Halteeinsatzes,
- Fig. 9: eine gesonderte und ebenfalls vergrößerte Perspektivansicht einer zweiten, insbesondere zur Aufnahme eines Steckerteils vorgesehenen Ausführung des erfindungsgemäßen Halteeinsatzes,
- Fig. 10: einen Axialschnitt des Halteeinsatzes gemäß Fig. 8,
- Fig. 11: einen Axialschnitt des Halteeinsatzes gemäß Fig. 9,

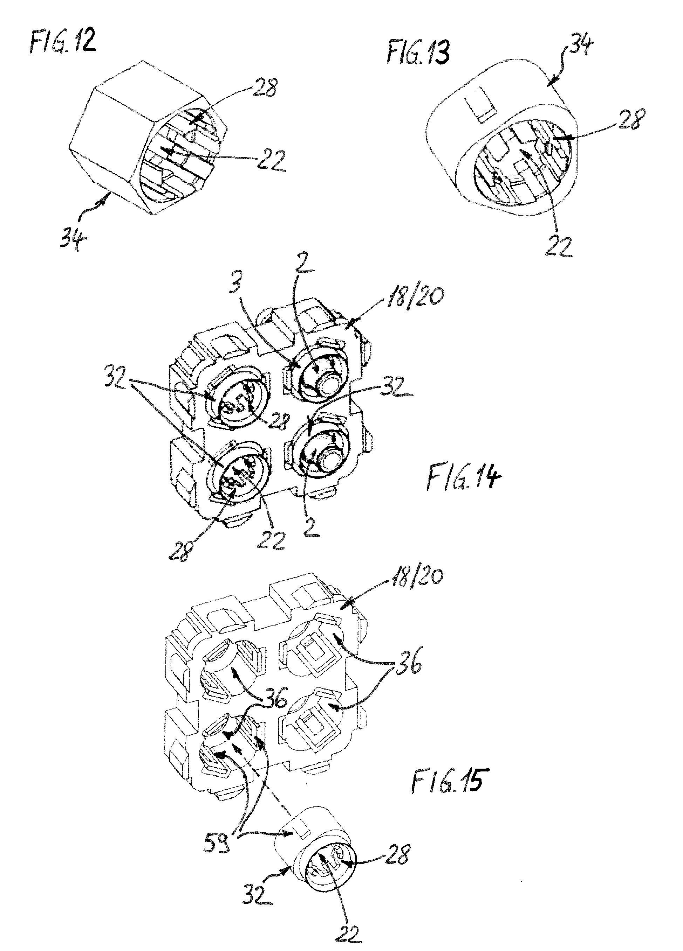

- Fig. 12 und 13: jeweils eine Perspektivansicht einer Ausführungsvariante des Halteeinsatzes,
- Fig. 14: eine Perspektivansicht eines Kupplungsträgers in einer alternativen Ausführung und
- Fig. 15: eine weitere Ansicht ähnlich Fig. 14 zur Erläuterung des Vorgangs beim Einsetzen eines Halteeinsatzes.

In den verschiedenen Figuren der Zeichnung sind gleiche Teile stets mit den gleichen Bezugszeichen versehen.

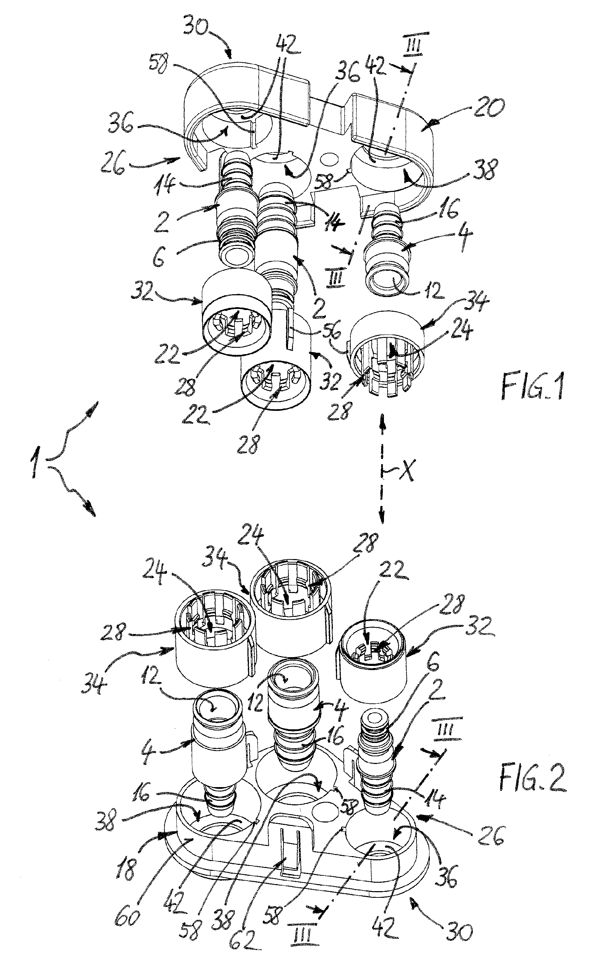

Wie sich zunächst aus den Fig. 1 und 2 ergibt, ist eine erfindungsgemäße Kupplungseinrichtung 1 als Mehrfachkupplung für eine bestimmte Anzahl von mindestens zwei, in diesem Ausführungsbeispiel drei Steckkupplungen vorgesehen, wobei jede Steckkupplung aus zwei Steckkupplungsteilen, und zwar einem Steckerteil 2 und einem Muffenteil 4, besteht. Wie sich zusätzlich auch aus den Fig. 3 bis 6 ergibt, besitzt jedes Steckerteil 2 einen Steckerschaft 6, der umfänglich insbesondere über einen in einer Außenringnut 8 sitzenden Dichtring 10 abgedichtet in eine Steckaufnahme 12 des korrespondierenden Muffenteils 4 einsteckbar ist. Die eingesteckte Stellung ist in Fig. 6 dargestellt.

Jedes Steckerteil 2 besitzt an seinem dem Steckerschaft 6 entgegengesetzten, hinteren Ende einen Anschlussstutzen 14, und jedes Muffenteil 4 weist einen von der Steckaufnahme 12 axial abgekehrten, hinteren Anschlussstutzen 16 auf. Diese Anschlussstutzen 14, 16 dienen zum Anschluss von nicht dargestellten Medienleitungen, insbesondere von Kunststoff-Rohrleitungen, vorzugsweise aus PA, indem jede Leitung auf einen der Anschlussstutzen 14, 16 aufgesteckt wird.

Die Kupplungseinrichtung 1 weist ferner zwei im Wesentlichen plattenartige Kupplungsträger 18, 20 zur Halterung und Arretierung der Steckkupplungsteile 2, 4 auf. Dazu sitzt jedes Steckkupplungsteil 2, 4 in einer Aufnahmeöffnung 22 bzw. 24. Die Kupplungsträger 18 und 20 sind in einer zueinander im Wesentlichen parallelen Anordnung mit einander zugewandten Kupplungsseiten 26 miteinander so verbindbar, dass die Aufnahmeöffnungen 22, 24 jeweils paarweise einander axial fluchtend gegenüberliegen und die in den Aufnahmeöffnungen 22, 24 sitzenden Kupplungsteile 2, 4 beim Zusammenfügen der Kupplungsträger 18, 20 paarweise in einer Fügerichtung - siehe die Doppelpfeile X in Fig. 1, 2 und in Fig. 10, 11 sowie auch in Fig. 4 und 5 - ineinander gesteckt werden (siehe die gesteckte Kupplungslage in Fig. 6).

Zur Halterung und Fixierung der Steckkupplungsteile 2, 4 sind innerhalb jeder Aufnahmeöffnung 22, 24 derart ausgebildete Haltemittel 28 vorgesehen, dass jedes Steckkupplungsteil 2, 4 einerseits bei getrennten Kupplungsträgern 18, 20 - insbesondere von einer rückwärtigen, der jeweiligen Kupplungsseite 26 gegenüberliegenden Leitungsseite 30 her - in die zugehörige Aufnahmeöffnung 22 bzw. 24 rastend einsteckbar sowie andererseits im verbundenen Zustand der Kupplungsträger 18, 20 - siehe dazu Fig. 6 - durch selbsttätiges Sperren der Haltemittel 28 formschlüssig und dadurch unlösbar gehalten ist.

Bei den Ausführungsbeispielen gemäß Fig. 1 bis 6 und 8 bis 11 ist jedes Steckkupplungsteil 2, 4 mit formschlüssiger Verrastung in die zugehörige Aufnahmeöffnung 22 bzw. 24 einsetzbar, so dass es bereits im Vormontagezustand nach Fig. 5 unlösbar oder nur durch eine radiale Zwangsbewegung der Haltemittel 28 - insbesondere mittels eines nicht dargestellten Lösewerkzeugs - wieder lösbar ist. Alternativ dazu kann aber - analog zu dem eingangs erwähnten Stand der Technik - auch eine kraftformschlüssige und dadurch in der Vormontagestellung gemäß Fig. 5 auch wieder rastend lösbare Verrastung vorgesehen sein, siehe dazu die Fig. 7.

Erfindungsgemäß ist nun vorgesehen, dass jede Aufnahmeöffnung 22 bzw. 24 zusammen mit den Haltemitteln 28 in einem separaten, patronenartigen Halteeinsatz 32 bzw. 34 gebildet ist. Dazu wird auch auf die gesonderten Darstellungen in Fig. 8 bis 11 verwiesen. Jeder Halteeinsatz 32, 34 ist als ursprünglich separates Einzelteil in eine zugehörige Aufnahme 36 bzw. 38 des jeweiligen Kupplungsträgers 18, 20 eingesetzt und darin gegen Lösen fixiert. Mit besonderem Vorteil können alle Aufnahmen 36, 38 beider Kupplungsträger 18, 20 gleich ausgebildet sein, so dass auch alle Halteeinsätze 32, 34 mit gleichen Außenkonturen ausgebildet sind. In den dargestellten Beispielen sind allerdings die Halteeinsätze 18 und 20 für die Steckerteile 2 einerseits und für die Muffenteile 4 andererseits mit unterschiedlichen Außenkonturen, insbesondere mit unterschiedlich großen Außenquerschnitten, ausgebildet, so dass auch die jeweils zugehörigen Aufnahmen 36 und 38 mit angepassten unterschiedlichen Innenkonturen ausgebildet sind.

Für die Fixierung gegen Lösen kann jeder Halteeinsatz 32, 34 über geeignete Fixiermittel in der jeweiligen Aufnahme 36, 38 beispielsweise kraft- und/oder formschlüssig und/oder stoffschlüssig fixiert sein, und zwar vorzugsweise durch Rasten, Klemmen, Einpressen, Schweißen und/oder Kleben. Ein Verschweißen kann bevorzugt durch Laserschweißen oder Ultraschallschweißen erfolgen. Eine Fixierung durch Verrastung wird im Folgenden anhand eines Beispiels in Fig. 14 und 15 noch erläutert werden.

Zur Aufnahme von bei der praktischen Anwendung auftretenden, axialen Kräften, insbesondere Leitungs-Zugkräften, ist es vorteilhaft, wenn jeder Halteeinsatz 32, 34 in der jeweiligen Aufnahme 36, 38 des Kupplungsträgers 18, 20 in Einsetzrichtung an einem Endanschlag 40 anliegt (siehe Fig. 4 bis 6), der bevorzugt durch einen radial nach innen ragenden Ringsteg 42 des jeweiligen Kupplungsträgers 18, 20 gebildet ist. Bevorzugt ist jeder Halteeinsatz 32, 34 von der Kupplungsseite 26 des jeweiligen Kupplungsträgers 18, 20 her in die zugehörige Aufnahme 36, 38 eingesetzt. Deshalb begrenzen die Ringstege 42 die Aufnahmen 36, 38 als Endanschlag 40 auf der gegenüberliegenden Leitungsseite 30. Durch die Endanschläge 40 werden vorteilhafterweise die sonstigen, zuvor beispielhaft erwähnten Fixiermittel nicht oder nur unwesentlich mit solchen axialen Kräften belastet.

Wie sich insbesondere aus den vergrößerten Darstellungen in Fig. 8 bis 11 ergibt, weist jeder Halteeinsatz 32, 34 als Haltemittel 28 radial federelastische Rastarme 44, 46 auf, die über den Umfang der Aufnahmeöffnung 22, 24 verteilt angeordnet sind und sich in Fügerichtung X der Steckkupplungsteile 2, 4 erstrecken. Die Rastarme 44, 46 weisen in einem radial elastisch beweglichen, zu der Kupplungsseite 26 des jeweiligen Kupplungsträgers 18, 20 weisenden Bereich radial nach innen in die Aufnahmeöffnung 22 bzw. 24 vorspringende Rastansätze 48 auf, die mit einer Ringnut 50 des jeweiligen Steckkupplungsteils 2, 4 in den Ausführungen gemäß Fig. 1 bis 6 und 8 bis 11 aufgrund eines Hinterschneidungswinkels von mindestens 90° formschlüssig rastend zusammenwirken. Dazu wird insbesondere auf Fig. 3 bis 5 verwiesen. Alternativ können aber für eine kraftformschlüssige Verrastung die Rastansätze 48 auch mit einem Hinterschneidungswinkel kleiner 90° ausgebildet sein, wie dies in Fig. 7 - hier beispielhaft für den Kupplungsträger 20 mit seinem Halteeinsatz 34 und einem der Muffenteile 4 - dargestellt ist. Bei allen dargestellten Ausführungsbeispielen ist weiterhin vorgesehen, dass die Rastarme 46 jeder für ein Muffenteil 4 vorgesehenen Aufnahmeöffnung 24 in Fügerichtung X weisende Sperransätze 52 aufweisen, die im verbundenen Zustand der Kupplungsträger 18, 20 in jeweils einen die Rastarme 44 innerhalb der für eines der Steckerteile 2 vorgesehenen Aufnahmeöffnung 22 umschließenden Ringspalt 54 derart eingreifen, dass dann alle Rastarme 44 und 46 aller Halteeinsätze 32, 34 der beiden Kupplungsträger 18, 20 gegen eine radiale Bewegung gesperrt sind. Dies lässt sich anhand der Darstellung in Fig. 6 leicht nachvollziehen. Die Rastarme 44 des Halteeinsatzes 32 stützen sich radial nach außen an den Sperransätzen 52 der Rastarme 46 des Halteeinsatzes 34 ab, und die Rastarme 46 mit ihren Sperransätzen 52 werden radial nach außen von einem äußeren, den Ringspalt 54 radial nach außen begrenzenden Ringkragen 55 abgestützt, der seinerseits fest in der Aufnahme 36 des Kupplungsträgers 18 sitzt. Zusätzlich kann - wie in Fig. 6 erkennbar ist - der Ringkragen 55 in einen äußeren Ringkragen 57 des anderen Halteansatzes 45 eingreifen, wobei dieser Ringkragen 57 fest in der Aufnahme 38 des Kupplungsträgers 20 sitzt.

Es sei an dieser Stelle bemerkt, dass alternativ auch eine umgekehrte Ausführung der Sperrung vorgesehen sein kann. Dies bedeutet, dass die Sperransätze 52 auch an den Rastarmen 44 gebildet sein können, wobei dann die Sperransätze 52 in einen die Rastarme 46 umschließenden Ringspalt eingreifen.

Durch die beschriebene selbsttätige Sperrung der Rastarme 44, 46 wird eine formschlüssige Verriegelung der Steckkupplungsteile 2, 4 in den Aufnahmeöffnungen 22, 24 erreicht, und zwar sowohl mit der überwiegend dargestellten formschlüssigen Verrastung, als auch mit der alternativ möglichen kraftformschlüssigen Verrastung gemäß Fig. 7.

Um sicher zu stellen, dass in dem gekuppelten Zustand gemäß Fig. 6 jeweils ein Sperransatz 52 in Umfangsrichtung genau im Bereich des radial gegenüberliegenden Rastarms 44 und nicht etwa im Bereich einer Lücke zwischen den Rastarmen 44 liegt, ist in bevorzugter Ausgestaltung vorgesehen, dass jeder Halteeinsatz 32, 34 in einer entsprechend definierten Drehausrichtung in der zugehörigen Aufnahme 36, 38 des jeweiligen Kupplungsträgers 18, 20 sitzt.

Bei dem bevorzugten Ausführungsbeispiel gemäß Fig. 1 bis 11 ist dazu vorgesehen, dass jeder Halteeinsatz 32, 34 eine im Querschnitt kreisförmige, wie dargestellt bevorzugt zylindrische Außenkontur aufweist, wobei an mindestens einer Umfangsstelle einerseits der Halteeinsatz 32, 34 an seinem Außenumfang und andererseits die Aufnahme 36 bzw. 38 des Kupplungsträgers 18, 20 an ihrem Innenumfang korrespondierende, radial ineinander greifende Positionselemente 56, 58 aufweisen. Wie dargestellt kann jeder Halteeinsatz 32, 34 als Positionselement 56 einen axial, in Einsetzrichtung verlaufenden, stegförmigen, radial vorspringenden Ansatz aufweisen, während als Positionselement 58 in jeder Aufnahme 36, 38 eine korrespondierende Aufnahmenut gebildet ist. Natürlich ist auch eine umgekehrte Ausführung möglich.

Alternativ zu dieser bevorzugten Ausführung kann gemäß Fig. 12 bis 15 auch vorgesehen sein, dass jeder Halteeinsatz 32, 34 eine im Querschnitt gesehen von der Kreisform abweichende, insbesondere im Wesentlichen polygonale Außenkontur aufweist, wobei dann jede Aufnahme 36, 38 des jeweiligen Kupplungsträgers 18, 20 eine entsprechend angepasste Innenkontur aufweist. Gemäß Fig. 12 kann der dort dargestellte Halteeinsatz 34 als Außensechskant mit einem Außenquerschnitt in der Form eines regelmäßigen Sechsecks ausgebildet sein. Gemäß Fig. 13 bis 15 kann jeder Halteeinsatz 32, 34 auch einen Außenquerschnitt in der Form eines regelmäßigen Dreiecks, hier beispielhaft mit abgerundeten Ecken, aufweisen.

Wie sich noch aus Fig. 14 und 15 ergibt, sind bei dieser Ausführung die Halteeinsätze - hier beispielhaft nur für die Halteeinsätze 32 veranschaulicht - über Rastmittel 59 in den jeweiligen Aufnahmen 36 fixiert. Daraus resultiert eine besonders einfache Montage, indem die Halteansätze 32 nur in Richtung des gestrichelten Pfeils in Fig. 15 eingesetzt zu werden brauchen; die Fixierung erfolgt dabei selbsttätig über die Rastmittel 59, und zwar mit bevorzugt formschlüssiger Verrastung.

In bevorzugter Ausgestaltung ist jeder Halteeinsatz 32, 34 mit den Haltemitteln 28 als einstückiges Kunststoff-Formteil ausgebildet. Weiterhin ist bevorzugt auch jeder Kupplungsträger 18, 20 mit den Aufnahmen 36, 38 für die Halteeinsätze 32, 34 als einstückiges Formteil insbesondere aus Kunststoff ausgebildet.

Zur Montage werden bevorzugt zunächst die beiden Kupplungsträger 18, 20 mit den jeweiligen Halteeinsätzen 32, 34 bestückt, indem letztere in die zugehörigen Aufnahmen 36, 38 eingesetzt und darin auf geeignete Weise fixiert werden. Dieser Vor- bzw. Zwischenmontagezustand ist in Fig. 4 dargestellt. Es können dann erst die Steckkupplungsteile 2, 4 mit den nicht dargestellten Medienleitungen verbunden und dann in die Aufnahmeöffnungen 22, 24 eingesetzt werden (Fig. 5). Dann können die fertig bestückten Kupplungsträger 18, 20 mit den angeschlossenen Leitungen im Bereich einer Wandungsöffnung, insbesondere einer so genannten Schottwand in einem Fahrzeug montiert werden. Dazu kann beispielsweise der in Fig. 2 dargestellte Kupplungsträger 18, mit einer äußeren Randkontur 60 von einer Seite der Wandung her in die Wandungsöffnung eingesetzt und bevorzugt über Rastmittel 62 lösbar fixiert werden. Abschließend wird der andere bestückte Kupplungsträger 20 von der anderen Seite der Wandung her mit dem dort vormontierten Kupplungsträger 18 gekuppelt. Dabei werden die Stecker- und Muffenteile 2, 4 zusammengesteckt, und es erfolgt eine automatische Verriegelung aller Steckkupplungsteile 2, 4 in den jeweiligen Aufnahmeöffnungen 22, 24, siehe Fig. 6.

Abweichend von dem zuvor beschriebenen Montageablauf ist es auch möglich, erst einen der nur mit den Halteansätzen bestückten Kupplungsträger, zum Beispiel den Kupplungsträger 18, im Bereich der Wandungsöffnung zu montieren. Es können dann die vorteilhafterweise bereits zuvor mit Leitungen verbundenen Steckkupplungsteile 2, 4 in die Aufnahmeöffnungen 22, 24 von der rückwärtigen Leitungsseite 30 her eingesetzt werden. Auch in den anderen Kupplungsträger 20 gemäß Fig. 1 werden die bevorzugt mit Leitungen vormontierten Steckkupplungsteile 2, 4 von der Leitungsseite 30 her in die Aufnahmeöffnungen 22, 24 eingesetzt, bevor beide Kupplungsträger 18, 20 dann wie oben beschrieben zusammengefügt werden.

Bevorzugt sind die beiden Kupplungsträger 18, 20 im miteinander verbundenen, gekuppelten Zustand insbesondere über mindestens eine Schraubverbindung gegen Trennen fixierbar. Anstatt einer Verrastung des ersten Kupplungsträgers 18 in der Wandungsöffnung kann auch eine andere Befestigungsart, zum Beispiel über Schraubverbindungen, vorgesehen sein.

Im Übrigen entspricht die Ausgestaltung und Funktion der erfindungsgemäßen Kupplungseinrichtung 1 insbesondere im Bereich der Haltemittel 28 den bekannten Ausführungen, wie sie insbesondere in der EP 1 841 995 B1 und/oder der EP 0 618 393 B1 detailliert beschrieben sind.

Die Erfindung ist nicht auf die dargestellten und beschriebenen Ausführungsbeispiele beschränkt, sondern umfasst auch alle im Sinne der Erfindung gleichwirkenden Ausführungen.

## Patentansprüche

1. Kupplungseinrichtung (1) für Schlauch- und/oder Rohrleitungen, insbesondere für Wandungsdurchführungen von Druckmittelleitungen, mit zwei plattenartigen, miteinander verbindbaren Kupplungsträgern (18, 20), die jeweils Aufnahmeöffnungen (22, 24) zur fixierten Halterung von eingesetzten Steckkupplungsteilen, und zwar von Steckerteilen (2) einerseits und Muffenteilen (4) andererseits, derart aufweisen, dass durch eine Fügeverbindung der Kupplungsträger (18, 20) die Stecker- und Muffenteile (2, 4) paarweise in einer Fügerichtung (X) ineinander gesteckt werden, wobei innerhalb jeder Aufnahmeöffnung (22, 24) jedes Kupplungsträgers (18, 20) derart ausgebildete Haltemittel (28) vorgesehen sind, dass jedes Steckkupplungsteil (2, 4) einerseits bei getrennten Kupplungsträgern (18, 20) in die zugehörige Aufnahmeöffnung (22, 24) rastend einsteckbar sowie andererseits im verbundenen Zustand der Kupplungsträger (18, 20) durch selbsttätiges Sperren der Haltemittel (28) unlösbar gehalten ist,
**dadurch gekennzeichnet, dass** jede Aufnahmeöffnung (22, 24) zusammen mit den Haltemitteln (28) in einem separaten Halteeinsatz (32, 34) gebildet ist, wobei jeder Halteeinsatz (32, 34) in eine zugehörige Aufnahme (36, 38) des jeweiligen Kupplungsträgers (18, 20) eingesetzt und darin gegen Lösen fixiert ist.

2. Kupplungseinrichtung nach Anspruch 1,
**dadurch gekennzeichnet, dass** jeder Halteeinsatz (32, 34) in einer definierten Drehausrichtung in der zugehörigen Aufnahme (36, 38) des Kupplungsträgers (18, 20) sitzt.

3. Kupplungseinrichtung nach Anspruch 1 oder 2,
**dadurch gekennzeichnet, dass** jeder Halteeinsatz (32, 34) eine im Querschnitt kreisförmige Außenkontur aufweist, wobei an mindestens einer Umfangsstelle einerseits der Halteeinsatz (32, 34) an seinem Außenumfang und andererseits die Aufnahme (36, 38) des Kupplungsträgers (18, 20) an ihrem Innenumfang korrespondierende, radial ineinander greifende Positionselemente (56, 58) aufweisen.

4. Kupplungseinrichtung nach Anspruch 1 oder 2,
**dadurch gekennzeichnet, dass** jeder Halteeinsatz (32, 34) eine im Querschnitt gesehen von der Kreisform abweichende, insbesondere polygonale Außenkontur aufweist, wobei jede Aufnahme (36, 38) des Kupplungsträgers (18, 20) eine entsprechend angepasste, korrespondierende Innenkontur aufweist.

5. Kupplungseinrichtung nach einem der Ansprüche 1 bis 4,
**dadurch gekennzeichnet, dass** jeder Halteeinsatz (32, 34) in der jeweiligen Aufnahme (36, 38) kraft- und/oder formschlüssig und/oder stoffschlüssig fixiert ist, vorzugsweise durch Rasten und/oder Klemmen und/oder Schweißen und/oder Kleben.

6. Kupplungseinrichtung nach einem der Ansprüche 1 bis 5,
**dadurch gekennzeichnet, dass** jeder Halteeinsatz (32, 34) in der jeweiligen Aufnahme (36, 38) des Kupplungsträgers (18, 20) in Einsetzrichtung an einem - insbesondere durch einen radial nach innen ragenden Ringsteg (42) des Kupplungsträgers (18, 20) gebildeten - Endanschlag (40) anliegt.

7. Kupplungseinrichtung nach einem der Ansprüche 1 bis 6,
**dadurch gekennzeichnet, dass** jeder Halteeinsatz (32, 34) von einer vorderen Kupplungsseite (26) des jeweiligen Kupplungsträgers (18, 20) her in die zugehörige Aufnahme (36, 38) eingesetzt ist.

8. Kupplungseinrichtung nach einem der Ansprüche 1 bis 7,
**dadurch gekennzeichnet, dass** jeder Halteeinsatz (32, 34) als Haltemittel (28) radial federelastische Rastarme (44, 46) aufweist, die über den Umfang der Aufnahmeöffnung (22, 24) verteilt angeordnet sind und sich in Fügerichtung (X) der Steckkupplungsteile (2, 4) erstrecken.

9. Kupplungseinrichtung nach Anspruch 8,
**dadurch gekennzeichnet, dass** die Rastarme (44, 46) in ihrem radial elastisch beweglichen, zur vorderen Kupplungsseite (26) des jeweiligen Kupplungsträgers (18, 20) weisenden Bereich radial nach innen in die Aufnahmeöffnung (22, 24) vorspringende Rastansätze (48) aufweisen, die mit einer Ringnut (50) des jeweiligen Steckkupplungsteils (2, 4) formschlüssig rastend oder kraftformschlüssig rastend zusammenwirken.

10. Kupplungseinrichtung nach Anspruch 8 oder 9,
**dadurch gekennzeichnet, dass** die Rastarme (46) jeder insbesondere für ein Muffenteil (4) vorgesehenen Aufnahmeöffnung (24) in Fügerichtung weisende Sperransätze (52) aufweisen, die im verbundenen Zustand der Kupplungsträger (18, 20) in jeweils einen die Rastarme (44) jeder insbesondere für ein Steckerteil (2) vorgesehenen Aufnahmeöffnung (22) umschließenden Ringspalt (54) derart eingreifen, dass alle Rastarme (44, 46) aller Halteeinsätze (32, 34) der beiden Kupplungsträger (18, 20) gegen eine radiale Bewegung gesperrt sind.

11. Kupplungseinrichtung nach einem der Ansprüche 1 bis 10,
**dadurch gekennzeichnet, dass** jeder Halteeinsatz (32, 34) mit den Haltemitteln (28) als einstückiges Kunststoff-Formteil ausgebildet ist.

12. Kupplungseinrichtung nach einem der Ansprüche 1 bis 11,
**dadurch gekennzeichnet, dass** jeder Kupplungsträger (18, 20) mit den Aufnahmen (36, 38) für die Halteeinsätze (32, 34) als einstückiges Formteil insbesondere aus Kunststoff ausgebildet ist.

13. Kupplungseinrichtung nach einem der Ansprüche 1 bis 12,
**dadurch gekennzeichnet, dass** einer (18) der zwei Kupplungsträger (18, 20) mit einer äußeren Randkontur (60) in eine Wandungsöffnung einer Wandung einsetzbar und bevorzugt über Rastmittel (62) fixierbar ist.

14. Kupplungseinrichtung nach einem der Ansprüche 1 bis 12,
**dadurch gekennzeichnet, dass** einer der zwei Kupplungsträger (18, 20) im Bereich einer Wandungsöffnung an einer Wandung - insbesondere über Schraubverbindungen - befestigbar ist.

15. Kupplungseinrichtung nach einem der Ansprüche 1 bis 14,
**dadurch gekennzeichnet, dass** die beiden Kupplungsträger (18, 20) im verbundenen, gekuppelten Zustand - insbesondere über mindestens eine Schraubverbindung - gegen Trennen fixierbar sind.

## Claims

1. Coupling device (1) for hose lines and/or pipelines, in particular for wall lead-throughs of pressure-medium lines, having two plate-like coupling carriers (18, 20) which can be connected to one another, which coupling carriers each have receiving openings (22, 24) for the fixed mounting of inserted plug-in coupling parts, namely plug parts (2) on the one hand and socket parts (4) on the other, such that by means of a joining connection of the coupling carriers (18, 20), the plug and socket parts (2, 4) are inserted into one another in pairs in a joining direction (X), wherein holding means (28) configured in this manner are provided within each receiving opening (22, 24) of each coupling carrier (18, 20), such that on the one hand each plug-in coupling part (2, 4) can be plugged in a latching manner into the corresponding receiving opening (22, 24) when the coupling carriers (18, 20) are separated and, on the other hand, is also held non-releasably when the coupling carriers (18, 20) are in the connected state through automatic locking of the retaining means (28),
**characterized in that** each receiving opening (22, 24) is formed along with the retaining means (28) in a separate retaining insert (32, 34), wherein each retaining insert (32, 34) is inserted into an associated receiving means (36, 38) of the respective coupling carrier (18, 20) and fixed therein to prevent release.

2. Coupling device according to Claim 1,
**characterized in that** each retaining insert (32, 34) sits in a defined rotational alignment in the associated receiving means (36, 38) of the coupling carrier (18, 20).

3. Coupling device according to Claim 1 or 2,
**characterized in that** each retaining insert (32, 34) has a circular outer contour in cross section, wherein at at least one circumferential point, the retaining insert (32, 34), on the one hand, exhibits on its outer circumference and, on the other hand, the receiving means (36, 38) of the coupling carrier (18, 20) on its inner circumference, corresponding radially inwardly engaging positional elements (56, 58).

4. Coupling device according to Claim 1 or 2,
**characterized in that** each retaining insert (32, 34) has an outer contour which differs from the circular form viewed in cross section, in particular a polygonal outer contour, wherein each receiving means (36, 38) of the coupling carrier (18, 20) exhibits a suitably adapted, corresponding inner contour.

5. Coupling device according to one of Claims 1 to 4,
**characterized in that** each retaining insert (32, 34) is fixed in the respective receiving means (36, 38) in a frictional and/or positively locking and/or substance bonded manner, namely preferably by latching, clamping, pressing in, welding and/or bonding.

6. Coupling device according to one of Claims 1 to 5,
**characterized in that** each retaining insert (32, 34) in the respective receiving means (36, 38) of the coupling carrier (18, 20) in the insertion direction bears against an end stop (40) - in particular formed by a radially inwardly projecting annular web (42) of the coupling carrier (18, 20).

7. Coupling device according to one of Claims 1 to 6,
**characterized in that** each retaining insert (32, 34) is inserted into the associated receiving means (36, 38) from a front coupling side (26) of the respective coupling carrier (18, 20).

8. Coupling device according to one of Claims 1 to 7,
**characterized in that** each retaining insert (32, 34) exhibits radially resilient latching arms (44, 46) as the retaining means (28), which latching arms are distributed about the circumference of the receiving opening (22, 24) and extend in the joining direction (X) of the plug-in coupling parts (2, 4).

9. Coupling device according to Claim 8,
**characterized in that** the latching arms (44, 46) exhibit radially inwardly latching projections (48) projecting into the receiving opening (22, 24) in their radially elastically movable region pointing to the front coupling side (26) of the respective coupling carrier (18, 20), which latching projections interact in a positively latching or frictionally latching manner with an annular groove (50) in the respective plug-in coupling part (2, 4).

10. Coupling device according to Claim 8 or 9,
**characterized in that** the latching arms (46) of each receiving opening (24) provided in particular for a socket part (4) exhibit locking projections (52) pointing in the joining direction, which engage with an annular groove (54) enclosing the latching arms (44) of each receiving opening (22) provided in particular for a plug part (2) when the coupling carriers (18, 20) are in the connected state, such that all latching arms (44, 46) of all retaining inserts (32, 34) of the two coupling carriers (18, 20) are locked to prevent radial movement.

11. Coupling device according to one of Claims 1 to 10,
**characterized in that** each retaining insert (32, 34) is configured with the retaining means (28) as a one-piece plastic moulded part.

12. Coupling device according to one of Claims 1 to 11,
**characterized in that** each coupling carrier (18, 20) is configured with the receiving means (36, 38) for the retaining inserts (32, 34) as a one-piece moulded part, particularly made of plastic.

13. Coupling device according to one of Claims 1 to 12,
**characterized in that** one (18) of the two coupling carriers (18, 20) can be inserted with an outer peripheral contour (60) into a wall opening of a wall and preferably fixed by means of latching means (62).

14. Coupling device according to one of Claims 1 to 12,
**characterized in that** one of the two coupling carriers (18, 20) can be fastened to a wall in the region of a wall opening - in particularly by means of screw connections.

15. Coupling device according to one of Claims 1 to 14,
**characterized in that** the two coupling carriers (18, 20) in the connected, coupled state can be fixed to prevent separation - in particular by means of at least one screw connection.

## Revendications

1. Dispositif d'accouplement (1) pour des conduites en tuyau souple et/ou en tuyau rigide, notamment pour des passages de paroi de conduites de fluide sous pression, avec deux supports d'accouplement (18, 20) en forme de plaque, pouvant être reliés entre eux qui présentent respectivement des ouvertures de réception (22, 24) pour le support fixé de parties d'accouplement à enfichage insérées, c'est à dire de parties de fiche (2) d'une part et de parties de manchon (4) d'autre part, de telle manière que les parties de fiche et de manchon (2, 4) soient enfichées l'une dans l'autre par paire par une liaison d'assemblage des supports d'accouplement (18, 20) dans un sens d'assemblage (X), dans lequel des moyens de retenue (28) réalisés dans chaque ouverture de réception (22, 24) de chaque support d'accouplement (18, 20) sont prévus de telle manière que chaque partie d'accouplement à enfichage (2, 4) d'une part puisse être enfichée par encliquetage en cas de supports d'accouplement (18, 20) séparés dans l'ouverture de réception (22, 24) afférente ainsi que soit maintenue de manière indétachable d'autre part à l'état relié des supports d'accouplement (18, 20) par verrouillage automatique des moyens de retenue (28),
**caractérisé en ce que** chaque ouverture de réception (22, 24) est formée conjointement avec les moyens de retenue (28) dans un insert de retenue (32, 34) séparé, chaque insert de retenue (32, 34) étant inséré dans un logement afférent (36, 38) du support d'accouplement (18, 20) respectif et étant fixé dedans pour éviter tout détachement.

2. Dispositif d'accouplement selon la revendication 1,
**caractérisé en ce que** chaque insert de retenue (32, 34) loge selon une orientation rotative définie dans le logement afférent (36, 38) du support d'accouplement (18, 20).

3. Dispositif d'accouplement selon la revendication 1 ou 2,
**caractérisé en ce que** chaque insert de retenue (32, 34) présente un contour extérieur de section transversale circulaire, sur au moins un point périphérique d'une part l'insert de retenue (32, 34) sur sa périphérie extérieure et d'autre part le logement (36, 38) du support d'accouplement (18, 20) sur sa périphérie intérieure présentant des éléments de position (56, 58) correspondants, s'engageant radialement l'un dans l'autre.

4. Dispositif d'accouplement selon la revendication 1 ou 2,
**caractérisé en ce que** chaque insert de retenue (32, 34) présente un contour extérieur en particulier polygonal, divergeant de la forme circulaire vu en section transversale, chaque logement (36, 38) du support d'accouplement (18, 20) présentant un contour intérieur correspondant adapté en conséquence.

5. Dispositif d'accouplement selon l'une quelconque des revendications 1 à 4,
**caractérisé en ce que** chaque insert de retenue (32, 34) est fixé dans le logement respectif (36, 38) à force et/ou par complémentarité de formes et/ou par liaison de matière, de préférence par encliquetage et/ou par serrage et/ou par soudage et/ou par collage.

6. Dispositif d'accouplement selon l'une quelconque des revendications 1 à 5,
**caractérisé en ce que** chaque insert de retenue (32, 34) repose dans le logement respectif (36, 38) du support d'accouplement (18, 20) dans le sens d'insertion sur une butée finale (40), formée en particulier par une nervure annulaire (42) dépassant radialement vers l'intérieur du support d'accouplement (18, 20).

7. Dispositif d'accouplement selon l'une quelconque des revendications 1 à 6,
**caractérisé en ce que** chaque insert de retenue (32, 34) est inséré depuis un côté d'accouplement (26) avant du support d'accouplement (18, 20) respectif dans le logement afférent (36, 38).

8. Dispositif d'accouplement selon l'une quelconque des revendications 1 à 7,
**caractérisé en ce que** chaque insert de retenue (32, 34) présente comme moyens de retenue (28) des bras d'encliquetage (44, 46) élastiques du type à ressort radial, qui sont agencés répartis sur la périphérie de l'ouverture de réception (22, 24) et s'étendent dans le sens d'assemblage (X) des parties d'accouplement à enfichage (2, 4).

9. Dispositif d'accouplement selon la revendication 8,
**caractérisé en ce que** les bras d'encliquetage (44, 46) présentent, dans leur zone tournée vers le côté d'accouplement (26) avant du support d'accouplement respectif (18, 20), mobile radialement de façon élastique, des saillies d'encliquetage (48) radialement en saillie vers l'intérieur dans l'ouverture de réception (22, 24) qui coagissent avec une rainure annulaire (50) de la partie d'accouplement à enfichage respective (2, 4) par encliquetage par complémentarité de formes ou par encliquetage à force.

10. Dispositif d'accouplement selon la revendication 8 ou 9,
**caractérisé en ce que** les bras d'encliquetage (46) de chaque ouverture de réception (24) prévue en particulier pour une partie de manchon (4) présentent des saillies de verrouillage (52) tournées dans le sens d'assemblage qui s'engagent à l'état relié des supports d'accouplement (18, 20) dans respectivement une fente annulaire (54) entourant les bras d'encliquetage (44) de chaque ouverture de réception (22) prévue en particulier pour une partie de fiche (2) de telle manière que tous les bras d'encliquetage (44, 46) de tous les inserts de retenue (32, 34) des deux supports d'accouplement (18, 20) soient bloqués contre un mouvement radial.

11. Dispositif d'accouplement selon l'une quelconque des revendications 1 à 10,
**caractérisé en ce que** chaque insert de retenue (32, 34) est réalisé avec les moyens de retenue (28), sous la forme d'une partie moulée en plastique d'un seul tenant.

12. Dispositif d'accouplement selon l'une quelconque des revendications 1 à 11,
**caractérisé en ce que** chaque support d'accouplement (18, 20) est réalisé avec les logements (36, 38) pour les inserts de retenue (32, 34), sous la forme d'une partie moulée d'un seul tenant, en particulier en plastique.

13. Dispositif d'accouplement selon l'une quelconque des revendications 1 à 12,
**caractérisé en ce que** l'un (18) des deux supports d'accouplement (18, 20) peut être inséré avec un contour de bord (60) extérieur dans une ouverture d'une paroi et peut être fixé de préférence par des moyens d'encliquetage (62).

14. Dispositif d'accouplement selon l'une quelconque des revendications 1 à 12,
**caractérisé en ce que** l'un des deux supports d'accouplement (18, 20) peut être fixé dans la zone d'une ouverture de paroi sur une paroi, en particulier par des vissages.

15. Dispositif d'accouplement selon l'une quelconque des revendications 1 à 14,
**caractérisé en ce que** les deux supports d'accouplement (18, 20) peuvent être fixés à l'état couplé et relié, en particulier par au moins un vissage, contre toute séparation.
